(19) Europäisches Patentamt

European Patent Office

Office européen des brevets

(11) **EP 2 182 760 B1**

(12) **EUROPEAN PATENT SPECIFICATION**

(45) Date of publication and mention
of the grant of the patent:
**17.02.2016 Bulletin 2016/07**

(21) Application number: **08801019.4**

(22) Date of filing: **28.09.2008**

(51) Int Cl.:
***H04W 36/00*** (2009.01)     *H04W 4/06* (2009.01)

(86) International application number:
**PCT/CN2008/072585**

(87) International publication number:
**WO 2009/043314 (09.04.2009 Gazette 2009/15)**

(54) **A CALL CONTROLLING METHOD AND BASE STATION SUBSYSTEM**

EIN ANRUFKONTROLLVERFAHREN UND BASISSTATION-UNTERSYSTEM

PROCÉDÉ DE COMMANDE D'APPEL ET SOUS-SYSTÈME DE STATION DE BASE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.09.2007   CN 200710151405**

(43) Date of publication of application:
**05.05.2010   Bulletin 2010/18**

(73) Proprietor: **Huawei Technologies Co., Ltd.
Longgang District
Shenzhen, Guangdong 518129 (CN)**

(72) Inventor: **SHEN, Minjun
Guangdong 518129 (CN)**

(74) Representative: **Körber, Martin Hans
Mitscherlich PartmbB
Patent- und Rechtsanwälte
Sonnenstrasse 33
80331 München (DE)**

(56) References cited:
| | |
|---|---|
| **EP-A2- 1 509 056** | **WO-A1-2006/070069** |
| **WO-A1-2006/071638** | **WO-A1-2006/084952** |
| **WO-A1-2007/045983** | **WO-A2-01/86975** |
| **WO-A2-2005/101886** | **CN-A- 1 601 948** |
| **CN-A- 1 608 389** | **CN-A- 1 735 269** |
| **CN-A- 1 774 115** | **CN-A- 1 777 323** |
| **CN-A- 1 859 674** | **CN-A- 1 878 419** |
| **CN-A- 1 933 618** | **CN-A- 1 953 573** |
| **CN-A- 1 964 551** | **CN-A- 1 984 390** |
| **CN-A- 1 997 219** | **US-A1- 2007 054 666** |
| **US-B2- 7 127 253** | |

## Description

## Field of the Invention

This invention relates to the field of communications, and more particularly to a call controlling method and a base station subsystem.

## Background of the Invention

Simply put, a group call service is the service that not only allows plural users to speak, but also enables more users to be listener at the same time. Taking the voice group call service (VGCS) for example, members participating in VGCS include dispatchers and service subscribers.

Dispatchers: there are 5 dispatchers at most in each VGCS call, and the dispatchers of the VGCS call may be fixed users or mobile users that participate in voice communication of group call over dedicated channels created by networks.

Service subscribers: service subscribers are mobile users who subscribed VGCS service, and called service subscribers participate in voice communication of group call over group call channels within a group call area.

The group call area is referred to as a group call region that consists of one or more cells. Upon initiation of a group call, only group call users currently resident in the cell(s) of the group call area can participate in the group call. When a terminal moves to a cell that does not belong to the group call region, it exits from group call.

One solution to user cell handover includes, under the first circumstance in the idle mode, setting parameter C1 (path loss principle parameter) as the basis for selecting a cell, to which a mobile phone gets access only when it is calculated that C1>0, where, C1 = A - Max(B, 0);

$A = Received\_Level\_Average - RXLEV\_ACCESS\_MIN$,
$B = MS\_TXPWR\_MAX\_CCH - P$.
Received_Level_Average is the received average level;
RXLEV_ACCESS_MIN relates to the minimum received level allowed to access;
MS_TXPWR_MAX_CCH is the maximum power level of a control channel; and
P is the maximum output level of the mobile phone.

After the mobile phone completes cell selection, the mobile phone under the standby mode needs to reselect a cell to select a more proper serving cell. The parameter that decides cell reselection is C2 (cell reselection channel quality standard parameter).

The principle for the mobile phone to reselect is to select the cell having the maximum C2 as the serving cell. C2 is determined by the following factors:

$$C2 = C1 + CRO - TO*H (PT-T) \ (PT < 31)$$

$$C2 = C1 - CRO \qquad (PT = 31)$$

where CRO (Cell_Reselection_Offset) is the cell reselection offset whose magnitude affects the difficulty with which the cell is reselected; TO (Temporary_Offset) is the temporary offset that functions during penalty time; and PT (Penalty_Time) is the penalty time.

Under the second circumstance, taking a group call process for example, in group call listening mode, since the terminal in group call listening mode cannot exchange signaling with the network and can only monitor the downlink of the group call channel, it is impossible to perform the handover operation, and is only possible to employ the reselection flow. Reselection of the group call listener still uses the C2 algorithm which is identical with the algorithm during reselection in the idle mode.

Taking the group call process for example, since the manner in which the user reselects the cell in the idle mode is the same as the manner in which the user reselects the cell in the group call listening mode, for a group call user (namely a group call listener in normal circumstances) located at the border of a group call cell, if there are plural adjacent cells, where cell signal is excellent in quality in the non-group call cell and cell signal is inferior in the group call cell, the terminal of this user will reselect a cell other than the group call cell, resulting in drop-out of the group call service, thus affecting normal proceeding of the service.

EP 1509056 A2 discloses a method for selecting a cell by a user equipment (UE) to receive a Multimedia Broadcast/Multicast Service (MBMS) service in a mobile communication system which supports the MBMS service with different frequency allocations (FAs) in the same area. In the method, a radio network controller (RNC) transmits information on an MBMS cell to the UE, and the MBMS cell information includes an MBMS offset for guaranteeing priority for cell reselection to the MBMS cell. The UE performs cell reselection using the MBMS cell information and receives the MBMS service from the reselected cell.

## Summary of the Invention

The technical problem to be solved by the embodiments of the present invention is to provide a call controlling method and a base station subsystem.

A call controlling method provided by the present invention includes: determining whether an adjacent cell is a group call area cell based on network attribute information in the information of the adjacent cell during a group call process; setting offset(s) for reselection parameter information of a group call area cell and/or a non-group call area cell among the adjacent cells, the offset(s) causing reselection indication information calculated based on the reselection parameter information of the group call area cell to be greater than reselection indication information calculated based on the reselection parameter information of the non-group call area cell under the same network condition; and transmitting the reselection parameter information of the adjacent cell that includes the offset information to a user terminal via a group call channel.

A base station subsystem provided by the present invention includes: an obtaining unit, configured to obtain information of an adjacent cell; a determining unit, configured to determine whether the adjacent cell is a group call area cell based on network attribute information in the information of the adjacent cell; a setting unit, configured to set offset(s) for reselection parameter information of a group call area cell among the adjacent cells and/or a non-group call area cell among the adjacent cells, the offset(s) causing reselection indication information calculated based on the reselection parameter information of the group call area cell to be greater than reselection indication information calculated based on the reselection parameter information of the non-group call area cell under the same network condition; a generating unit, configured to generate reselection parameter information of the adjacent cell that includes the offset information; and a transmitting unit, configured to transmit the reselection parameter information that includes the offset information of the adjacent cell to a user terminal via a group call channel.

In the embodiments of the present invention, since the reselection parameter information of the adjacent cells received by the user terminal from the base station subsystem includes offset information, group call cells can be differentiated from non-group call cells, so that it is made possible to control the user terminal accessing the group call cell preferentially.

**Brief Description of the Drawings**

Fig. 1 is a flowchart illustrating a call controlling method according to the first embodiment of the present invention;

Fig. 2 is a flowchart illustrating a call controlling method according to an example;

Fig. 3 is a flowchart illustrating a call controlling method according to an example;

Fig. 4 is a schematic view illustrating a base station subsystem according to the first embodiment of the present invention;

Fig. 5 is a schematic view illustrating a base station subsystem according to an example; and

Fig. 6 is a schematic view illustrating a user terminal according to an example.

**Detailed Description of the Embodiments**

Embodiments of the present invention provide a call controlling method, a base station subsystem and a user terminal to control the group call user accessing the group call cell preferentially.

In the embodiments of the present invention, since the relevant information received by the user terminal from the base station subsystem is distinguishable as to group call cells and non-group call cells, it is possible to control the user terminal accessing the group call cell preferentially.

Further, embodiments of the present invention may perform access control over group call through the following three modes.

In the first mode, the base station subsystem (BSS) delivers the offset:

Cell reselection parameters of adjacent cells are transmitted through a system message on the slow associated control channel (SACCH) of the group call cannel, and an offset is set for the reselection parameter of the cell to be selected preferentially, for instance, a fixed value may be added in the CRO of the cell to be selected preferentially, and setup of this value enables the user terminal to select the cell preferentially as a reselected target cell. Taking the group call process for example, one offset is set for the reselection parameters of cells belonging to a group call area, a fixed value may, for instance, be added in CROs of all adjacent cells belonging to the group call area, and setup of this value enables the group call user terminal to select the cells within the group call area preferentially as reselected target cells.

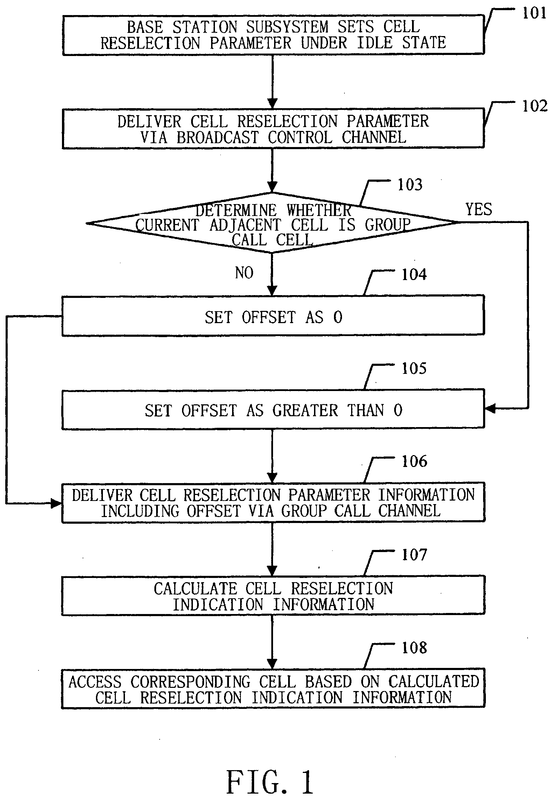

Specifically, taking the group call process for example, referring to Fig. 1, the first embodiment of the call controlling method in the embodiments of the present invention includes the following steps:

101: BSS sets cell reselection parameters under the idle state;

BSS sets, for each cell, a cell reselection parameter under the idle state of the terminal.

102: Deliver the cell reselection parameter via a Broadcast Control CHannel (BCCH);

The cell reselection parameter set by BSS is delivered to the user terminal via a BCCH.

103: Determine whether a current adjacent cell is a group call cell: if the current adjacent cell is a group call cell, the process proceeds to step 105; otherwise, the process proceeds to step 104;

BSS determines whether the current adjacent cell is a group call cell based on cell network attribute information in stored cell information of the adjacent cell.

In this embodiment, the group call cell may be regarded as a cell belonging to the group call area.

104: Set an offset as 0;

Specifically, if BSS determines that the adjacent cell is not a group call cell, an offset is set with the numerical value of 0.

105: Set an offset greater than 0;

Specifically, if BSS determines that the adjacent cell is a group call cell, an offset is set with the numerical value greater than 0, and this offset value increases the C2 value of the cell as finally calculated.
In this embodiment:

C1 = A - Max(B, 0);
A= Received_Level_Average - RXLEV_ACCESS_MIN,
B = MS_TXPWR_MAX_CCH - P.
Received_Level_Average is the received average level;
RXLEV_ACCESS_MIN relates to the minimum received level allowed to access;
MS_TXPWR_MAX_CCH is the maximum power level of the control channel; and
P is the maximum output level of the mobile phone.

After the mobile phone completes cell selection, the mobile phone under the standby mode should reselect a cell to select a more proper serving cell. The parameter that decides cell reselection is C2 (cell reselection channel quality standard parameter).
The principle for the mobile phone to reselect is to select the cell having the maximum C2 as the serving cell. For instance, the magnitude of C2 may be determined by computational expressions consisting of the following factors:

$$C2=C1+CRO-TO*H (PT-T) (PT <31)$$

$$C2=C1-CRO \qquad (PT = 31)$$

where CRO (Cell_Reselection_Offset) is the cell reselection offset whose magnitude affects the difficulty with which the cell is reselected; TO (Temporary_Offset) is the temporary offset that functions during penalty time; and PT (Penalty_Time) is the penalty time.
Specifically, in this embodiment an offset ΔCRO may be further added on the basis of the set CRO, and the sum by adding ΔCRO to CRO is CRO'. The reselection parameter CRO' of a certain adjacent cell is transmitted by BSS in the system message 10.
It is also possible to add an offset ΔRXLEV_ACCESS_MIN on the basis of RXLEV_ACCESS_MIN, with the sum thereof being RXLEV_ACCESS_MIN', and BSS transmits the reselection parameter RXLEV_ACCESS_MIN' of a certain adjacent cell in the system message 10.
In this embodiment, the magnitude of the numerical value of the specific offset is controllable according to practical circumstances of application, while no limitation is made here.

106: Deliver cell reselection parameter information including the offset via a group call channel;

BSS delivers the cell reselection parameter information including the preset offset via a group call channel to the user terminal.

107: Calculate cell reselection indication information;

Upon reception of the cell reselection parameter information including the offset, the user terminal calculates the cell reselection indication information, namely calculates the numerical value of C2. The specific calculating method may be based on the current calculation expression plus the numerical value of the offset.

108: Access a corresponding cell based on the calculated cell reselection indication information.

After the reselection indication information of each adjacent cell is calculated, the corresponding cell is accessed based on a preset access rule.
In this embodiment, the preset access rule may be: to select the cell having the maximum cell reselection indication to access. Since the user terminal adds the offset while calculating the cell reselection indication of the group call cell, the cell reselection indication of the group call cell is greater than the cell reselection indication of the non-group call cell under the same network condition, so that it is possible to control the user terminal accessing the group call cell preferentially.
In this embodiment, the mode(s) of adding ΔCRO and/or ΔRXLEV_ACCESS_MIN is/are employed to increase the value of C2 of adjacent cells in the group call area. This increase the priority of the adjacent cells in the group call area to be selected by the group call user terminal, but to a person ordinarily skilled in the art, it is also possible to employ the means of increasing other values to affect the value of C2 and thereby to increase the priority of the adjacent cells in the group call area to be selected by the group call user terminal within the objectives and scopes of this embodiment and without any creative effort.

In step 101 and step 102 in this embodiment, cell reselection parameter delivered through BCCH is cell reselection parameter under the idle state of the terminal, but these steps may not be performed if cell selection under idle state of the terminal is not considered in practical application.

In the second mode, the offset is calculated by user terminal.

BSS transmits reselection parameters of adjacent cells via the system message on SACCH of the group call channel, and simultaneously transmits category ID or state ID of each adjacent cell, for instance, by transmitting indication indicating whether each adjacent cell belongs to a group call area, in which case the user terminal of the group call listener adjusts the reselection parameter based on the indication during the group call process; for instance, a fixed value (which is set by the terminal) may be added in CROs of all adjacent cells belonging to the group call area, and variation of this value enables the group call listener to select the cells within the group call area preferentially as reselected target cells.

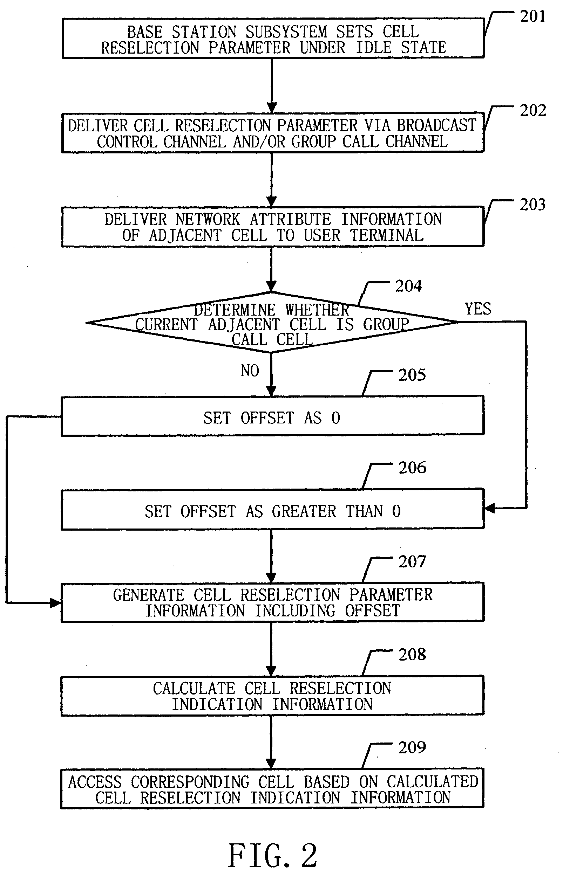

Specifically, taking the group call process for example, referring to Fig. 2, the example of the call controlling method includes the following steps:

    201: BSS sets cell reselection parameters under the idle state;

BSS sets for each cell a cell reselection parameter under the idle state of the terminal.

    202: Deliver the cell reselection parameter via BCCH and/or the group call channel;

The cell reselection parameter set by BSS is delivered to the user terminal via BCCH and/or the group call channel.

    203: Deliver network attribute information of the adjacent cell to the user terminal;

BSS queries the network attribute information of the adjacent cell, and transmits the queried network attribute information of the adjacent cell to the user terminal.

In this example, the network attribute information may be stored locally at BSS, or obtained by accessing other network elements. The network attribute information may be used to identify the attribute of the cell, for example, the cell is categorized as a group call cell or a non-group call cell.

    204: The user terminal determines whether the current adjacent cell is a group call cell: if the current adjacent cell is a group call cell, the process proceeds to step 206; otherwise, the process proceeds to step 205;

The user terminal determines whether the current adjacent cell is a group call cell based on the received network attribute information of the adjacent cell.

In this example, the group call cell may be regarded as a cell belonging to the group call area.

    205: Set an offset as 0;

If the user terminal determines that the adjacent cell is not a group call cell, an offset is set with the numerical value of 0.

    206: Set an offset greater than 0;

If the user terminal determines that the adjacent cell is a group call cell, an offset is set with the numerical value greater than 0, and this offset value increases the C2 value of the cell as finally calculated.

In this example:

    $C1 = A - Max(B, 0)$;
    A = Received_Level_Average - RXLEV_ACCESS_MIN,
    $B = MS\_TXPWR\_MAX\_CCH - P$.
    Received_Level_Average is the received average level;
    RXLEV_ACCESS_MIN relates to the minimum received level allowed to access;
    MS_TXPWR_MAX_CCH is the maximum power level of the control channel; and
    P is the maximum output level of the mobile phone.

After the mobile phone completes cell selection, the mobile phone under the standby mode should reselect a cell to select a more proper serving cell. The parameter that decides cell reselection is C2 (cell reselection channel quality standard parameter).

The principle for the mobile phone to reselect is to select the cell having the maximum C2 as the serving cell. C2 is determined by the following factors:

$$C2 = C1 + CRO - TO*H\,(PT-T)\,(PT < 31)$$

$$C2 = C1 - CRO \qquad (PT = 31)$$

where CRO (Cell_Reselection_Offset) is the cell reselection offset whose magnitude affects the difficulty with which the cell is reselected; TO (Temporary_Offset) is the temporary offset that functions during penalty time; and PT (Penalty_Time) is the penalty time.

Specifically, an offset ΔCRO may be further added on the basis of the set CRO, with the sum thereof being CRO', and BSS transmits the reselection parameter CRO' of a certain adjacent cell in the system message 10.

Moreover, it is also possible to add an offset ΔRXLEV_ACCESS_MIN on the basis of RXLEV_ACCESS_MIN, with the sum thereof being RXLEV_ACCESS_MIN', and BSS transmits the reselection parameter RXLEV_ACCESS_MIN' of a certain adjacent cell in the system message 10.

In this example, the magnitude of the numerical value of the specific offset is controllable according to practical circumstances of application, while no limitation is made here.

> 207: Generate cell reselection parameter information including the offset;

After setting the offset, the user terminal generates the cell reselection parameter information including the offset.

> 208: Calculate cell reselection indication information;

The user terminal calculates the cell reselection indication information, namely calculates the numerical value of C2. The specific calculating method is to add the numerical value of the offset onto the current calculation expression.

> 209: Access a corresponding cell based on the calculated cell reselection indication information.

After the reselection indication information of each adjacent cell is calculated, the corresponding cell is accessed based on a preset access rule.

In this example, the preset access rule may be: to select the cell having the maximum cell reselection indication to access. Since the user terminal adds the offset while calculating the cell reselection indication of the group call cell, the cell reselection indication of the group call cell is greater than the cell reselection indication of the non-group call cell under the same network condition, so that it is possible to control the user terminal accessing the group call cell preferentially.

In this example, the mode(s) of adding ΔCRO and/or ΔRXLEV_ACCESS_MIN is/are employed to increase the value of C2 of adjacent cells in the group call area. This increases the priority of the adjacent cells in the group call area to be selected by the group call user terminal, but to a persons ordinarily skilled in the art, it is also possible to employ the means of increasing other values to affect the value of C2 and thereby to increase the priority of adjacent cells in the group call area to be selected by the group call user terminal within the objectives and scopes of this example and without any creative effort.

In step 201 and step 202 in this example, cell reselection parameter delivered through BCCH is cell reselection parameter under the idle state of the terminal, but these steps may not be performed if cell selection under idle state of the terminal is not considered in practical application.

In the third mode, BSS delivers cell reselection parameter information of only the group call cell.

Reselection parameter information of only the adjacent cells that should be selected preferentially is transmitted via the system message on SACCH of the group call channel.

For instance, in the group call process, the cell reselection parameter information of adjacent cells in the group call area is delivered, whereas for the adjacent cells that do not belong to the group call area, only the cell list index or frequency point number of the adjacent cells is transmitted excluding the reselection parameter.

The user terminal reads the reselection parameters of the adjacent cells in the group call area, and measures the values of levels of these cells - if the values of levels of the adjacent cells in the group call area do not meet the minimum requirement (this minimum requirement may be set by a system message transmitted over the network, and may also be set by the terminal itself), the cell reselection parameter of adjacent cell outside the group call area is obtained based on the cell list index or frequency point number of the adjacent cell outside the group call area, the values of levels are measured, and a proper cell is selected as the reselected target cell.

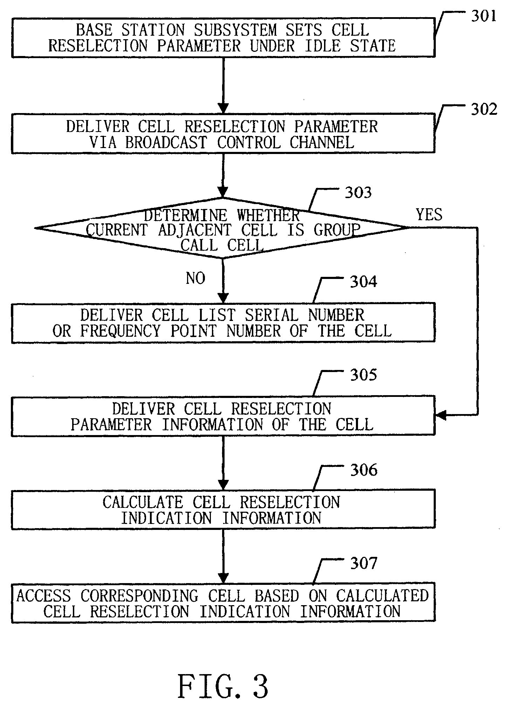

Specifically, taking the group call process for example, referring to Fig. 3, the example of the group call area controlling method includes the following steps:

> 301: BSS sets cell reselection parameters under the idle state;

BSS sets for each cell a cell reselection parameter under the idle state of the terminal.

> 302: Deliver the cell reselection parameter via BCCH;

The cell reselection parameter set by BSS is delivered to the user terminal via BCCH.

> 303: Determine whether the current adjacent cell is a group call cell: if the current adjacent cell is a group call cell, the process proceeds to step 305; otherwise, the process proceeds to step 304;

BSS determines whether the current adjacent cell is a group call cell based on cell network attribute information in stored cell information of the adjacent cell.

In this example, the group call cell may be regarded as a cell belonging to the group call area.

> 304: Deliver cell list index or frequency point number of the cell;

If BSS determines that the adjacent cell is not a group call cell, the cell list index or frequency point number of the cell is delivered to the user terminal.

305: Deliver cell reselection parameter information of the cell;

If BSS determines that the adjacent cell is a group call cell, the cell reselection parameter information of the cell is delivered to the user terminal.
The cell reselection parameter information in this example may be consistent with the process of cell reselection parameter information in the prior art.

306: Calculate cell reselection indication information;

After receiving the relevant information transmitted from BSS, the user terminal determines whether the value of the level of the group call cell satisfies the minimum requirement: if the value of the level of the group call cell satisfies the minimum requirement, the cell reselection indication information is calculated based on the received cell reselection parameter information of the group call cell; if the value of the level of the group call cell does not satisfy the minimum requirement, the corresponding cell reselection parameter information is queried based on the received cell list index or frequency point number, and the cell reselection indication parameter is calculated based on the queried cell reselection parameter information.

307: Accessing a corresponding cell based on the calculated cell reselection indication information.

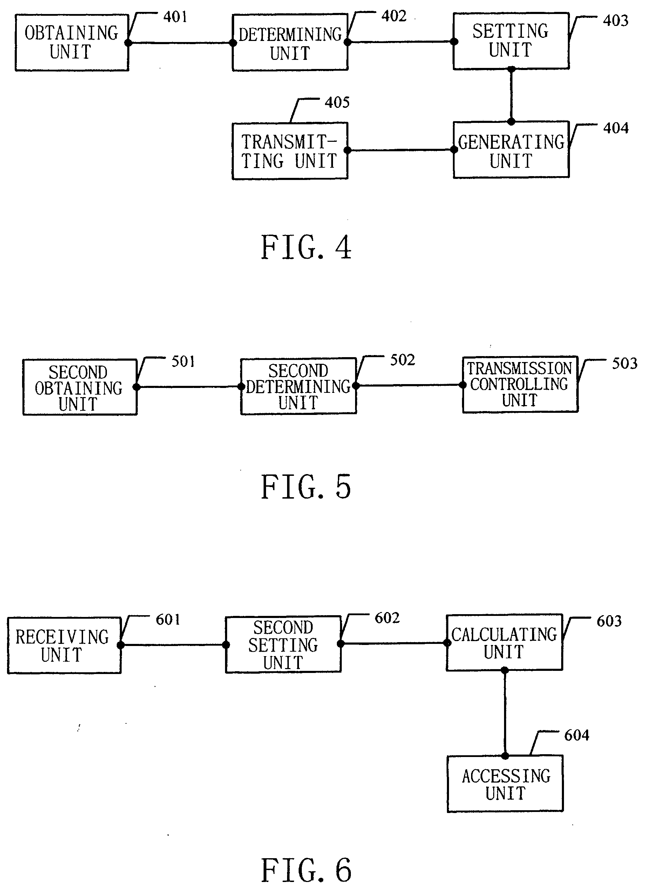

After the reselection indication information of each adjacent cell is calculated, the corresponding cell is accessed based on a preset access rule.
In this example, the preset access rule may be: to select the cell having the maximum cell reselection indication to access. For the group call cell, BSS directly delivers the cell reselection parameter information of the group call cell, whereas for the non-group call cell, BSS delivers the cell list index or frequency point number, and the user terminal therefore performs calculation of the cell reselection parameter information of the group call cell preferentially, so that it is possible to control the user terminal accessing the group call cell preferentially under the same network condition.
In step 301 and step 302 in this example, cell reselection parameter delivered through BCCH is cell reselection parameter under the idle state of the terminal, but these steps may not be performed if cell selection under idle state of the terminal is not considered in practical application.
Explanation is made below to the base station subsystem embodiments in the embodiments of the present invention. Referring to Fig. 4, a base station subsystem according to a first embodiment of the present invention includes:

an obtaining unit 401, configured to obtain information of an adjacent cell;

a determining unit 402, configured to determine whether the adjacent cell is a group call cell based on network attribute information in the information of the adjacent cell;

a setting unit 403, configured to set offset information based on the determining result of the determining unit;

a generating unit 404, configured to generate reselection parameter information of the adjacent cell that includes the offset information; and

a transmitting unit 405, configured to transmit the reselection parameter information of the adjacent cell that includes the offset information to a user terminal.

Referring to Fig. 5, a base station subsystem according to an example includes:

a second obtaining unit 501, configured to obtain information of an adjacent cell;

a second determining unit 502, configured to determine whether the adjacent cell is a group call cell based on network attribute information in the information of the adjacent cell; and

a transmission controlling unit 503, configured to transmit cell reselection parameter information of the adjacent cell to a user terminal if the adjacent cell is a group call cell, and configured to transmit an index or frequency point number of the cell to the user terminal if the adjacent cell is not a group call cell.

Referring to Fig. 6, a user terminal according to an example includes:

a receiving unit 601, configured to receive reselection parameter information and network attribute information of adjacent cells from a base station subsystem;

a second setting unit 602, configured to set offset information based on the network attribute information of the adjacent cells;

a calculating unit 603, configured to calculate cell reselection indication information based on the offset information and the reselection parameter information of the adjacent cells; and

an accessing unit 604, configured to access a corresponding cell based on the calculated cell reselection indication information and according to a preset access rule.

Understandably, the device embodiments or base station subsystems described above are merely exemplary in nature, where the units described as separable component parts may be either physically separate or not, and component parts shown as units may either be physical units or not, and may either be located at the same location or distributed over a plurality of network units. Alternatively, it is also possible to select partial or entire modules therefrom upon practical demand to achieve the objectives of the solutions of the embodiments.

Functions executed by each device in the embodiments are consistent with the steps described in the foregoing method embodiments, so that specific functions of each device are not repetitively described here.

By the foregoing description of the embodiments, persons skilled in the art should clearly understand that the present invention may be implemented via software plus the necessary general hardware platform, and may of course be implemented via hardware alone, but the former mode is a preferred embodiment under many circumstances. Based on such understanding, the substance of the technical solution of the present invention, or the portion of the invention that makes contribution to the state of the art, can be embodied in the form of a computer software product that is stored in a storage medium, such as an ROM, an RAM, a magnetic tape, or an optical disk, etc., and contains plural instructions enabling a computer device (which may be a personal computer, a server, or a network device, etc.) to execute the embodiments or methods recited in certain sections of the embodiments of the present invention.

What described in detail above are the call controlling method and base station subsystem provided by the embodiments of the present invention. The embodiments as provided are currently considered by the inventors to be relatively important or preferred scenarios for execution. To sum up, the contents in the present Description shall not be understood as restrictive to the present invention.

**Claims**

1. A call controlling method, comprising:

   determining (103) whether an adjacent cell is a group call area cell based on network attribute information in the information of the adjacent cell during a group call process;
   setting (104, 105) offset(s) for reselection parameter information of a group call area cell and/or a non-group call area cell among the adjacent cells, the offset(s) causing reselection indication information calculated based on the reselection parameter information of the group call area cell to be greater than reselection indication information calculated based on the reselection parameter information of the non-group call area cell under the same network condition; and **characterized in that** the method further comprises:

   transmitting (106) the reselection parameter information of the adjacent cell that includes the offset information to a user terminal via a group call channel.

2. The method according to claim 1, wherein the setting offset(s) comprises:

   setting a first offset for Cell_Reselection_Offset, CRO, in the reselection parameter information of the adjacent cell if the adjacent cell is a group call area cell; and/or
   setting a second offset for CRO in the reselection parameter information of the adjacent cell if the adjacent cell is a non-group call area cell.

3. The method according to claim 1, wherein the setting offset(s) comprises:

   setting a third offset for RXLEV_ACCESS_MIN in the reselection parameter information of the adjacent cell if the adjacent cell is a group call area cell; and/or
   setting a fourth offset for RXLEV_ACCESS_MIN in the reselection parameter information of the adjacent cell if the adjacent cell is a non-group call area cell.

4. A base station subsystem, comprising:

   an obtaining unit (401), configured to obtain information of an adjacent cell;
   a determining unit (402), configured to determine whether the adjacent cell is a group call area cell based on network attribute information in the information of the adjacent cell;
   a setting unit (403), configured to set offset(s) for reselection parameter information of a group call area cell and/or a non-group call area cell among the adjacent cells, the offset(s) causing reselection indication information calculated based on the reselection parameter information of the group call area cell to be greater than reselection indication information calculated based on the reselection parameter information of the non-group call area cell under the same network condition;
   a generating unit (404), configured to generate reselection parameter information of the adjacent cell that includes the offset information; and **characterized in that** the base station subsystem further comprises:

a transmitting unit (405), configured to transmit the reselection parameter information of the adjacent cell that includes the offset information to a user terminal via a group call channel.

**Patentansprüche**

1. Anrufsteuerungsverfahren, das Folgendes umfasst:

Bestimmen (103), ob eine angrenzende Zelle eine Gruppenanrufgebietszelle ist, basierend auf Netzattribut-Informationen in den Informationen der angrenzenden Zelle während eines Gruppenanrufprozesses;
Einstellen (104, 105) einer Verschiebung/von Verschiebungen für Wiederauswahlparameter-Informationen einer Gruppenanrufgebietszelle und/oder einer Nicht-Gruppenanrufgebietszelle unter den angrenzenden Zellen, wobei die Verschiebung(en) bewirkt/bewirken, dass Wiederauswahlanzeige-Informationen, die basierend auf den Wiederauswahlparameter-Informationen der Gruppenanrufgebietszelle berechnet werden, größer als Wiederauswahlanzeige-Informationen werden, die basierend auf den Wiederauswahlparameter-Informationen der Nicht-Gruppenanrufgebietszelle unter denselben Netzbedingungen berechnet werden; und
**dadurch gekennzeichnet, dass** das Verfahren Folgendes umfasst:

Senden (106) der Wiederauswahlparameter-Informationen der angrenzenden Zelle, die die Verschiebungs-Informationen beinhalten, über einen Gruppenanrufkanal an ein Anwendergerät.

2. Verfahren nach Anspruch 1, wobei das Einstellen der Verschiebung(en), Folgendes umfasst:

Einstellen einer ersten Verschiebung für "Cell_Reselection_Offset", CRO, in den Wiederauswahlparameter-Informationen der angrenzenden Zelle, wenn die angrenzende Zelle eine Gruppenanrufgebietszelle ist; und/oder Einstellen einer zweiten Verschiebung für CRO in den Wiederauswahlparameter-Informationen der angrenzenden Zelle, wenn die angrenzende Zelle eine Nicht-Gruppenanrufgebietszelle ist.

3. Verfahren nach Anspruch 1, wobei das Einstellen der Verschiebung(en) Folgendes umfasst:

Einstellen einer dritten Verschiebung für RXLEV_ACCESS_MIN in den Wiederauswahlparameter-Informationen der angrenzenden Zelle, wenn die angrenzende Zelle eine Gruppenanrufgebietszelle ist; und/oder Einstellen einer vierten Verschiebung für RXLEV_ACCESS_MIN in den Wiederauswahlparameter-Informationen der angrenzenden Zelle, wenn die angrenzende Zelle eine Nicht-Gruppenanrufgebietszelle ist.

4. Basisstation-Subsystem, das Folgendes umfasst:

eine Erhaltungseinheit (401), die dafür ausgelegt ist, Informationen über einer angrenzende Zelle zu erhalten;
eine Bestimmungseinheit (402), die dafür ausgelegt ist, zu bestimmen, ob die angrenzende Zelle eine Gruppenanrufgebietszelle ist, basierend auf Netzattribut-Informationen in den Informationen der angrenzenden Zelle;
eine Einstelleinheit (403), die dafür ausgelegt ist, eine Verschiebung/Verschiebungen für Wiederauswahlparameter-Informationen einer Gruppenanrufgebietszelle und/oder einer Nicht-Gruppenanrufgebietszelle unter den angrenzenden Zellen einzustellen, wobei die Verschiebung(en) bewirkt/bewirken, dass Wiederauswahlanzeige-Informationen, die basierend auf den Wiederauswahlparameter-Informationen der Gruppenanrufgebietszelle berechnet werden, größer als Wiederauswahlanzeige-Informationen werden, die basierend auf den Wiederauswahlparameter-Informationen der Nicht-Gruppenanrufgebietszelle unter denselben Netzbedingungen berechnet werden;
eine Erzeugungseinheit (404), die dafür ausgelegt ist, Wiederauswahlparameter-Informationen der angrenzenden Zelle zu erzeugen, die die Verschiebungs-Informationen beinhalten; und
**dadurch gekennzeichnet, dass** das Basisstation-Subsystem Folgendes umfasst:

eine Sendeeinheit (405), die dafür ausgelegt ist, die Wiederauswahlparameter-Informationen der angrenzenden Zelle, die die Verschiebungs-Informationen beinhalten, über einen Gruppenanrufkanal an ein Anwendergerät zu senden.

**Revendications**

1. Procédé de commande d'appel, comportant les étapes consistant à :

déterminer (103) si une cellule adjacente est une cellule en zone d'appel de groupe d'après des informations d'attributs de réseau figurant dans les informations de la cellule adjacente pendant un processus d'appel de groupe ;

spécifier (104, 105) un ou des décalages pour des informations de paramètres de resélection d'une cellule en zone d'appel de groupe et/ou d'une cellule hors zone d'appel de groupe parmi les cellules adjacentes, le ou les décalages faisant en sorte que des informations d'indication de resélection calculées d'après les informations de paramètres de resélection de la cellule en zone d'appel de groupe soient supérieures à des informations d'indication de resélection calculées d'après les informations de paramètres de resélection de la cellule hors zone d'appel de groupe dans le même état du réseau ; et **caractérisé en ce que** le procédé comporte en outre l'étape consistant à :

envoyer (106) les informations de paramètres de resélection de la cellule adjacente qui comprennent les informations de décalage à un terminal d'utilisateur via un canal d'appel de groupe.

2. Procédé selon la revendication 1, la spécification du ou des décalages comportant les étapes consistant à :

spécifier un premier décalage pour Cell_Reselection_Offset, CRO, dans les informations de paramètres de resélection de la cellule adjacente si la cellule adjacente est une cellule en zone d'appel de groupe ; et/ou spécifier un deuxième décalage pour CRO dans les informations de paramètres de resélection de la cellule adjacente si la cellule adjacente est une cellule hors zone d'appel de groupe.

3. Procédé selon la revendication 1, la spécification du ou des décalages comportant les étapes consistant à :

spécifier un troisième décalage pour RXLEV_ACCESS_MIN dans les informations de paramètres de resélection de la cellule adjacente si la cellule adjacente est une cellule en zone d'appel de groupe ; et/ou spécifier un quatrième décalage pour RXLEV_ACCESS_MIN dans les informations de paramètres de resélection de la cellule adjacente si la cellule adjacente est une cellule hors zone d'appel de groupe.

4. Sous-système de station de base, comportant :

une unité (401) d'obtention, configurée pour obtenir des informations d'une cellule adjacente ;
une unité (402) de détermination, configurée pour déterminer si la cellule adjacente est une cellule en zone d'appel de groupe d'après des informations d'attributs de réseau figurant dans les informations de la cellule adjacente ;
une unité (403) de spécification, configurée pour spécifier un ou des décalages pour des informations de paramètres de resélection d'une cellule en zone d'appel de groupe et/ou d'une cellule hors zone d'appel de groupe parmi les cellules adjacentes, le ou les décalages faisant en sorte que des informations d'indication de resélection calculées d'après les informations de paramètres de resélection de la cellule en zone d'appel de groupe soient supérieures à des informations d'indication de resélection calculées d'après les informations de paramètres de resélection de la cellule hors zone d'appel de groupe dans le même état du réseau ;
une unité (404) de génération, configurée pour générer des informations de paramètres de resélection de la cellule adjacente qui comprennent les informations de décalage ; et **caractérisé en ce que** le sous-système de station de base comporte :

une unité (405) d'émission, configurée pour envoyer les informations de paramètres de resélection de la cellule adjacente qui comprennent les informations de décalage à un terminal d'utilisateur via un canal d'appel de groupe.

BASE STATION SUBSYSTEM SETS CELL
RESELECTION PARAMETER UNDER IDLE STATE — 101

↓

DELIVER CELL RESELECTION PARAMETER
VIA BROADCAST CONTROL CHANNEL — 102

↓

DETERMINE WHETHER
CURRENT ADJACENT CELL IS GROUP
CALL CELL — 103

NO ↓        YES →

SET OFFSET AS 0 — 104

↓

SET OFFSET AS GREATER THAN 0 — 105

↓

DELIVER CELL RESELECTION PARAMETER INFORMATION
INCLUDING OFFSET VIA GROUP CALL CHANNEL — 106

↓

CALCULATE CELL RESELECTION
INDICATION INFORMATION — 107

↓

ACCESS CORRESPONDING CELL BASED ON CALCULATED
CELL RESELECTION INDICATION INFORMATION — 108

FIG. 1

BASE STATION SUBSYSTEM SETS CELL RESELECTION PARAMETER UNDER IDLE STATE ⌐ 201

↓

DELIVER CELL RESELECTION PARAMETER VIA BROADCAST CONTROL CHANNEL AND/OR GROUP CALL CHANNEL ⌐ 202

↓

DELIVER NETWORK ATTRIBUTE INFORMATION OF ADJACENT CELL TO USER TERMINAL ⌐ 203

↓

DETERMINE WHETHER CURRENT ADJACENT CELL IS GROUP CALL CELL ⌐ 204    YES

NO

↓

SET OFFSET AS 0 ⌐ 205

↓

SET OFFSET AS GREATER THAN 0 ⌐ 206

↓

GENERATE CELL RESELECTION PARAMETER INFORMATION INCLUDING OFFSET ⌐ 207

↓

CALCULATE CELL RESELECTION INDICATION INFORMATION ⌐ 208

↓

ACCESS CORRESPONDING CELL BASED ON CALCULATED CELL RESELECTION INDICATION INFORMATION ⌐ 209

FIG. 2

```
┌────────────────────────────────────────┐  ┌─ 301
│      BASE STATION SUBSYSTEM SETS CELL   │
│  RESELECTION PARAMETER UNDER IDLE STATE │
└────────────────────────────────────────┘
                    │
                    ▼
┌────────────────────────────────────────┐  ┌─ 302
│     DELIVER CELL RESELECTION PARAMETER  │
│       VIA BROADCAST CONTROL CHANNEL     │
└────────────────────────────────────────┘
```

BASE STATION SUBSYSTEM SETS CELL RESELECTION PARAMETER UNDER IDLE STATE — 301

DELIVER CELL RESELECTION PARAMETER VIA BROADCAST CONTROL CHANNEL — 302

DETERMINE WHETHER CURRENT ADJACENT CELL IS GROUP CALL CELL — 303   YES

NO

DELIVER CELL LIST SERIAL NUMBER OR FREQUENCY POINT NUMBER OF THE CELL — 304

DELIVER CELL RESELECTION PARAMETER INFORMATION OF THE CELL — 305

CALCULATE CELL RESELECTION INDICATION INFORMATION — 306

ACCESS CORRESPONDING CELL BASED ON CALCULATED CELL RESELECTION INDICATION INFORMATION — 307

FIG. 3

FIG. 4

FIG. 5

FIG. 6

**EP 2 182 760 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1509056 A2